# EUROPEAN PATENT SPECIFICATION

(11) **EP 2 838 798 B1**
(45) Date of publication and mention of the grant of the patent: **13.04.2016**
(21) Application number: 13725815.8
(22) Date of filing: 19.04.2013
(51) Int. Cl.: B65B 21/24, B65B 35/36, B65B 35/54, B65B 53/00

(54) **PACKAGING SYSTEM**
VERPACKUNGSSYSTEM
SYSTÈME D'EMBALLAGE

(30) Priority: 20.04.2012 IT PR20120024
(43) Date of publication of application: 25.02.2015
(73) Proprietor: OCME S.r.l., 43122 Parma (PR) (IT)
(72) Inventor: STOCCHI, Gabriele, I-43121 Parma (PR) (IT)
(74) Representative: Branca, Emanuela
(86) International application number: PCT/IB2013/053108
(87) International publication number: WO 2013/156975

(56) References cited:
- EP-A1- 0 703 167
- EP-A2- 0 191 158
- DE-U1- 20 115 235
- GB-A- 2 082 997
- US-A- 4 651 879
- US-A1- 2007 119 687
- US-A1- 2009 071 102
- US-A1- 2011 272 244
- US-B1- 6 209 710

## Description

The present invention relates to the field of packaging plants for bottles and/or containers in general for liquids.

It more specifically relates to the end part of the plant, which starts from the labeller or filler and reaches the palletising machine.

It is known that if multiple machines are mechanically or electronically connected, the result is a system having as production efficiency, the product of the efficiencies of the individual machines. Therefore, by connecting multiple machines in sequence, the overall efficiency is decreased. Furthermore, the interposition of accumulation transports contributes to reducing the overall efficiency.

To increase this value it is necessary for the coupling/interface devices to resolve those problems that generate stoppages and thus losses in the efficiency of the individual machines.

For example, document US 2007/0119687 A1 teaches to connect an output star wheel of a bottle blow molding machine with parallel lanes of a conveyor zone by means of a distributor device provided with one or more endless conveyor chains placed in a closed loop cooperating with the star wheel and with the conveyor lanes and conveying the bottle by means of gripping means.

Document US 4 651 879 A teaches to release bottles from a star wheel onto pairs of adjacent lanes underlying the gripping circumference of the star wheel.

By analysing the individual machines that comprise a packaging plant, the following main problems are for example inferred:
- labeller: wet bottles, reel change;
- shrinkwrap machine: input bottle thrust, film change, thermoshrinking energy;
- cartoning machine: input bottle thrusts;
- transports: format change with consequent guide adjustment;
- palletiser: inlet packs synchronization.

The aim of the present invention is to guarantee a constant pressure on the separation system, normally having pegs or spacer elements, of the shrinkwrap machine that is responsible for dividing and spacing each bottle to form the desired groups.

Indeed, this is surely the greatest loss of efficiency problem in the shrinkwrap/cartoning machine.

A further aim of the system is to bring the packs to the palletiser and to allow the oven of the shrinkwrap machine to empty in the event of stoppage, so as to prevent the packs remaining inside the oven for too long from burning.

A further aim is to reduce the linear velocity of the output bottles from the labeller/filling machine in the smallest possible space without introducing instability in the bottles.

These aims are all achieved by the packaging system, object of the present invention, which is characterised by what is provided in the below-reported claims.

This and other characteristics will become more readily apparent from the following description of certain embodiments illustrated, purely by way of a non-limiting example, in the accompanying drawings, in which:
figure 1 illustrates a plan view of an example of bottling line comprising, downstream of a labelling or filling machine, a packaging system object of the invention;
figure 2 schematically illustrates the rotating carousel of the bottle dividing device according to a first embodiment;
figure 3 illustrates a diagram of the path of the bottles labelled along the conveying belt on reducing the speed according to the embodiment of figure 2;
figure 4 illustrates, in exploded form, the components of the connecting/release zone of the bottles in spiral progression;
figure 5a illustrates, from above, the rotating carousel equipped with gripping means;
figures 5b and 5c show an enlarged detail of the gripping means, in the open position and closed position respectively;
figure 6 illustrates the conveying belt with independent motors for the accumulation of the bottles before the shrinkwrap machine;
figures 7a-7d illustrate the transport system, with dynamic accumulation without guides, of the bundled packs, according to different operating configurations;
figure 8 schematically illustrates the rotating carousel and the bottle dividing device according to a second embodiment;
figures 9 - 15 schematically show an interaction sequence with a bottle of the rotating carousel, of which, for the sake of simplicity, only one gripping means is represented.

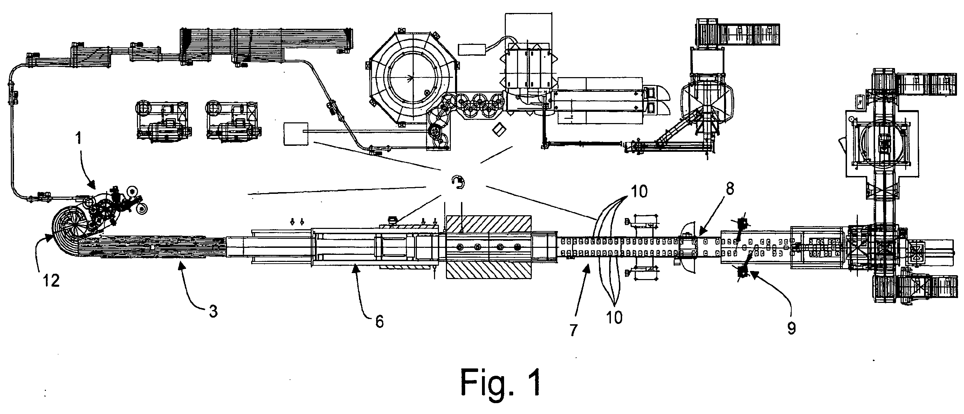

With particular reference to figure 1, a bottling line is illustrated comprising, upstream, a blowing and filling machine of known type and, downstream, in the end part of the line, possibly a labelling machine, followed by the packaging system according to the invention.

In the example represented, the packaging system comprises a pick-up device 2 to pick up filled, and possibly labelled, bottles from an upstream machine, a bottle dividing device comprising a multi-lane conveying belt 3, provided with a connecting zone 12 with the labelling or filling machine 1, a shrinkwrap machine 6, a transport system 7, at least one handle applicator 8 to apply the strip that acts as handle of the bundle and at least a palletiser 9.

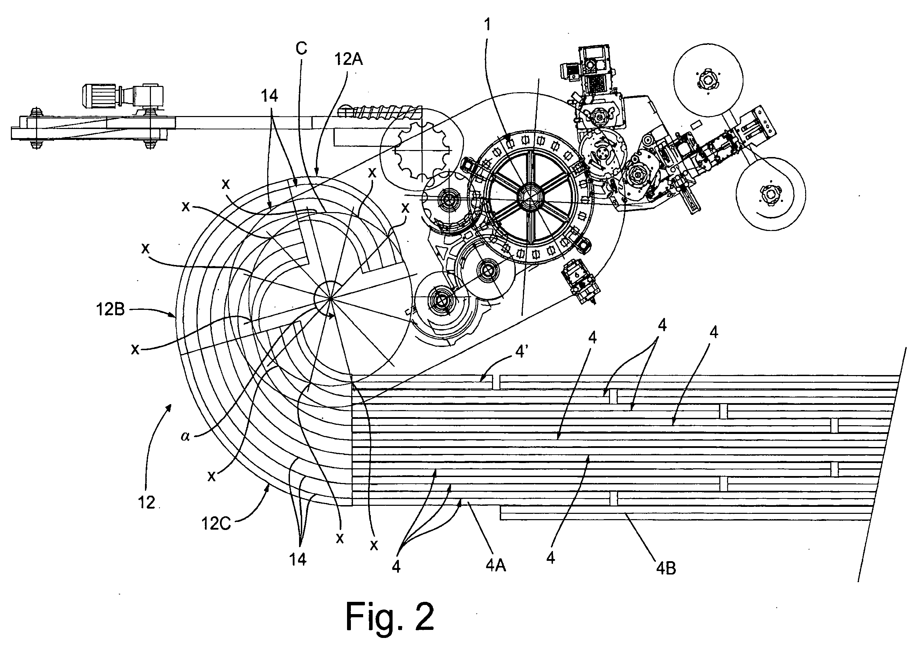

The pick-up device 2 comprises a dividing carousel that rotates according to a vertical axis arranged at the output, that is to say, downstream of the labelling or filling machine 1 and provided with a plurality of gripping means 13, of a clamp type in the example, which performs the function of picking up bottles 11 and releasing them onto one of the plurality of lanes 14 of the connecting zone 12 of the dividing device. Nine lanes are shown in the example of figure 2, of which eight are transport lanes and one a discard lane, each formed by flexible chain belts.

The connecting zone 12 with the multi-lane conveying belt 3 is formed by a series of a circular arc segments that are joined together so as to define a flexible chain belt with continuous surface having a spiral progression. Spiral progression means a progression with a curvature radius that increases in the advancement direction. Thus, when released by the gripping means 13 on the connecting zone 12, the bottles 11, in addition to being supported in resting in the lane 14 corresponding to the release zone, are progressively moved away from the centre of rotation of the carousel 2 and thus from the respective gripping means 13, according to the above-mentioned spiral progression.

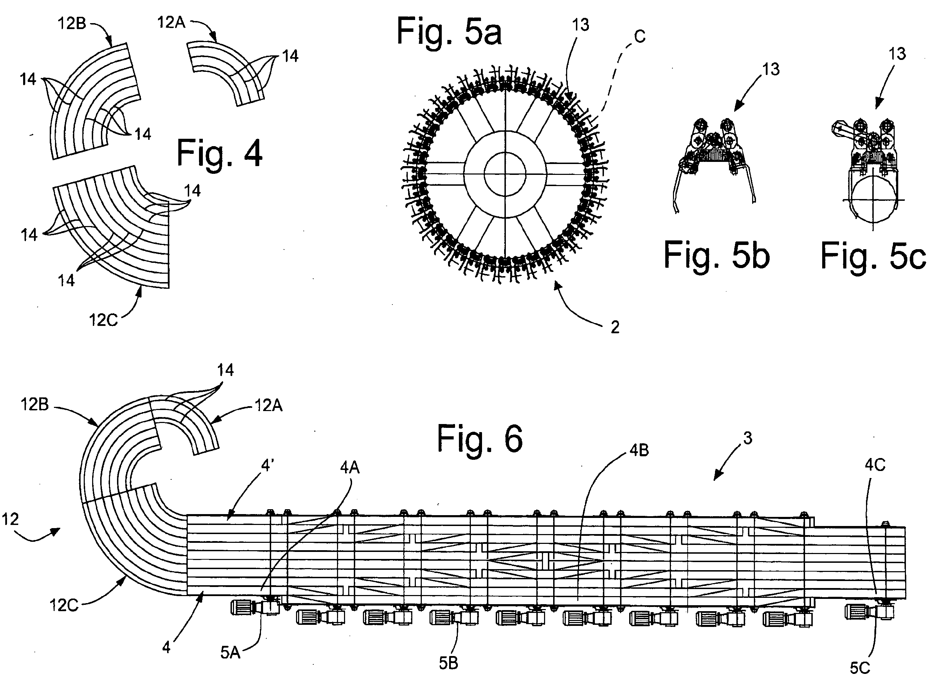

Three segments 12A, 12B, 12C, are shown in the example of figure 4, each substantially defining an arc of a circle of about 90°. Each segment is equipped with a fixed number of lanes 14 greater than the upstream segment in the bottle advancement direction. In the example shown, the first segment 12A has three lanes 14, the second segment 12B has six lanes 14 and the third segment 12C has nine lanes 14, equal in number to the lanes of the conveying belt 3 located downstream. The segments are aligned with each other on the outer perimeter, so that the outer lane 14 of the first segment 12A is also the outer lane 14 of the second and third segment 12B and 12C.

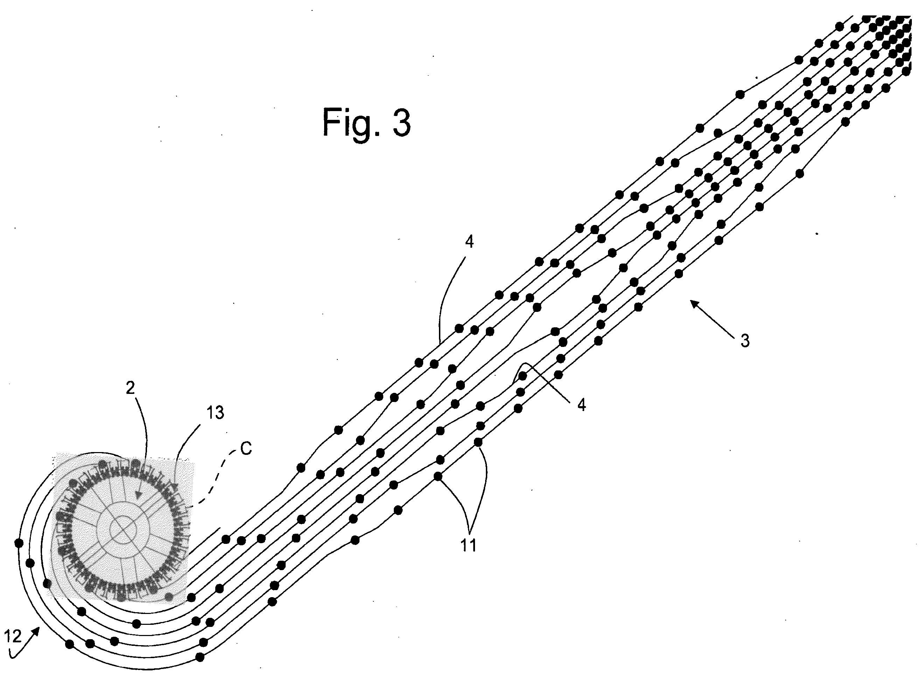

The lanes 14 of the connecting zone 12, arranged with a spiral progression, and the rotating carousel 2, which has the gripping means 13 that are movable along a grip circumference C, are reciprocally arranged so that each lane 14 that forms the belt of the connecting zone 12, is located underneath the rotating carousel 2, so that the release takes place at the desired point corresponding with the intersection X of the grip circumference C, as better illustrated in figures 2 and 3.

In particular, the release of the bottles 11 by the rotating carousel 2 takes place at positions distributed equidistant along an arc of the grip circumference C of angle α between 180° - 240° and directly on a different lane 14 of the connecting zone 12 underlying the point of release. Thus the bottles 11 are released by the rotating carousel 2, not along a single lane, but already along lanes 14 of the connecting zone 12 which are arranged side by side to each other. In the example illustrated in figure 2, the release takes place along an arc of a circle of substantially 240° in discrete spaced positions of about 30°.

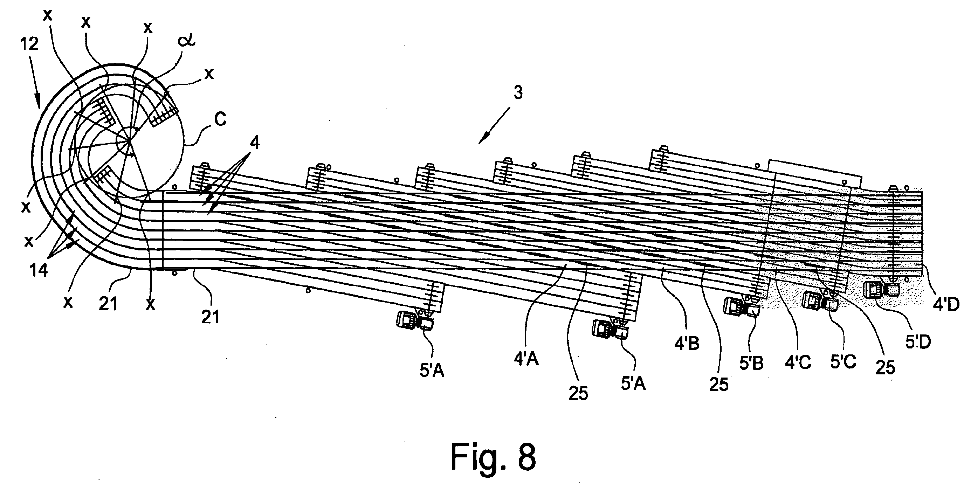

According to a further embodiment shown in figure 8, the connecting zone 12 comprises eight transport lanes 14 separated from each other by a lamina 21. The release of the bottles 11 by the rotating carousel 2 takes place at positions of intersection with the grip circumference C distributed equidistant along an arc of angle α equal to about 240°.

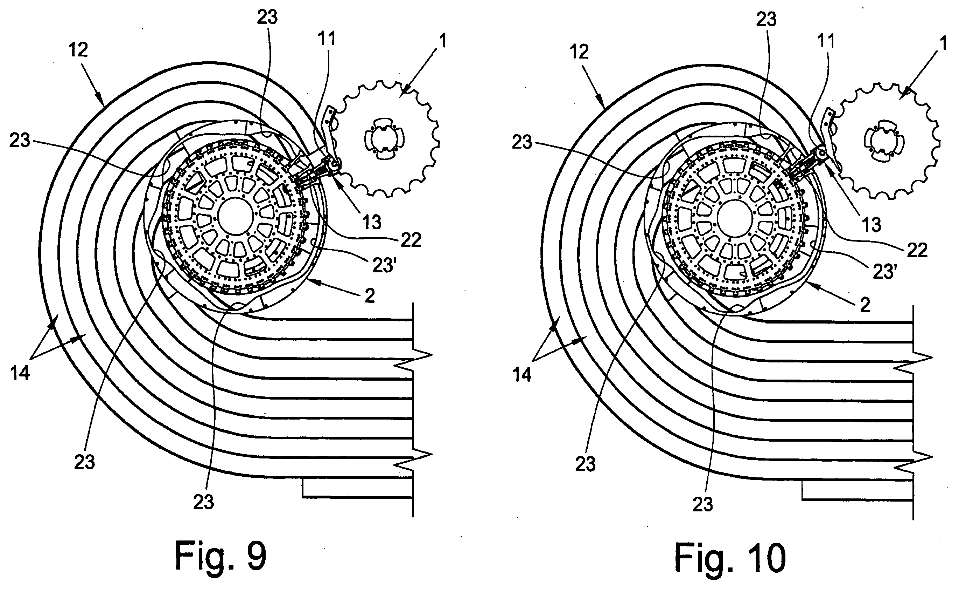

According to a preferred embodiment, as shown for example in figure 9, each of the gripping means 13 of the rotating carousel 2 comprises a thrust linear actuator 22 that pushes the gripping means 13 radially outward against a cam control.

The radial return movement is instead controlled by the cam profile itself.

The reciprocating movement in the radial direction of the gripping means 13 occurs between an extracted position corresponding to the opening of said gripping means 13 and a retracted position corresponding to the closure of said gripping means 13.

A cam 23 is associated with each lane 14 of the connecting zone 12; the cams 23 are distributed on two superimposed discs 24. A service cam 23' along the angular section that does not cooperate with the connecting zone maintains the gripping means in the extracted and open position until the bottle 11 is picked up by the rotating carousel 2 of the filling/labelling machine.

In particular, the release step of the bottle onto the lane 14 of the connecting zone 12 is progressively carried out along an end section, having an inclined profile, of the cam 23 to accompany the bottle 11 in the spiral trajectory of the lane 14.

The sequence of figures 9 - 15 shows the picking up of a bottle 11 transported by a carousel of a filling or labelling machine 1 and the release thereof onto the predetermined lane 14 of the connecting zone 12.

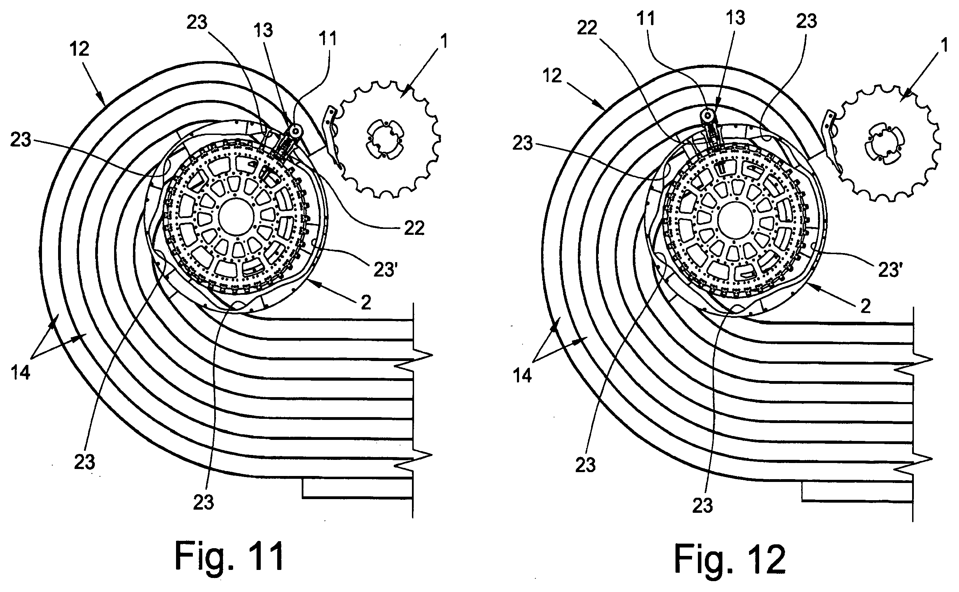

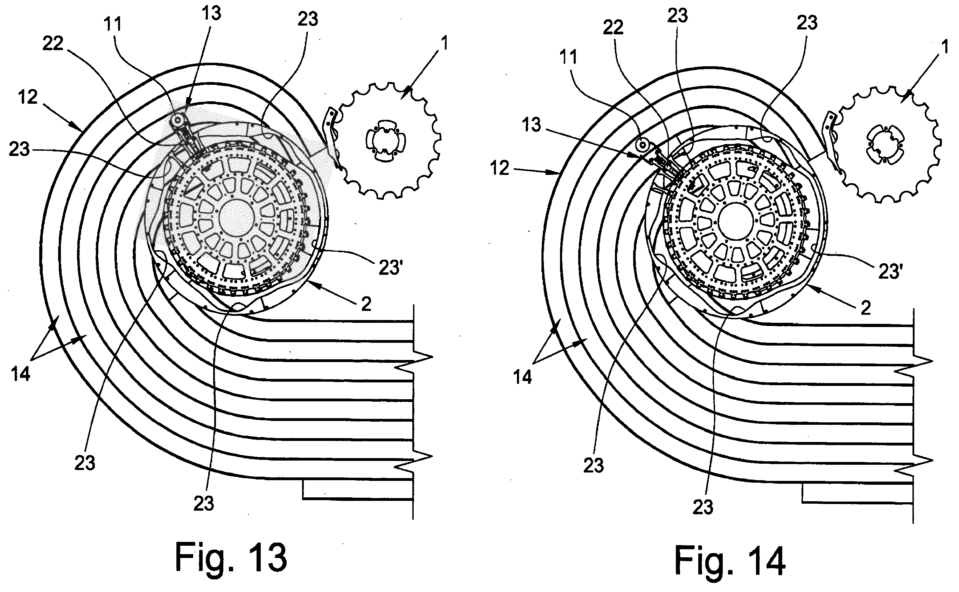

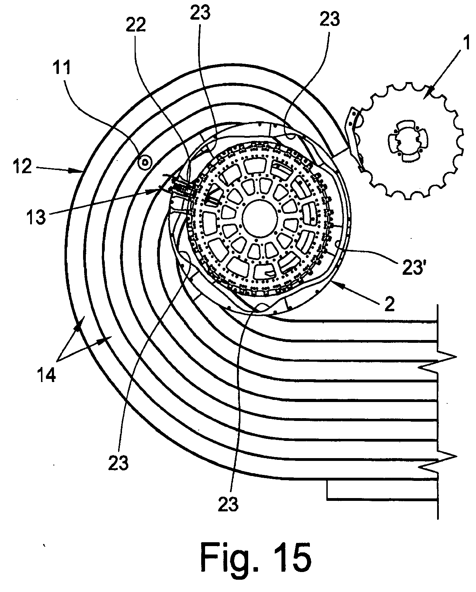

Figure 9 shows the approach step of a gripping means 13 in the advanced open position towards the bottle 11 to be picked up. Moving along the inclined outlet end section of the service cam 23', the gripping means 13 tighten around the bottle and progressively radially retract (figure 10). After having reached the fully retracted position, the gripping means 13 are maintained in this position during rotation of the carousel 2 (figure 11) until the cam 23 associated with the preselected lane 14, in the example, the third lane 14 from the outside, is reached. The gripping means are progressively pushed by the piston 22 towards the outside and guided by the inclined inlet end section of the cam 23 (figure 12), progressively opening (figure 13) until the bottle 11 is released on the lane 14 in proximity of the bottom of the cam 23 (figure 14) and then recalled by the output end section of the cam 23 in a backward closed position (figure 15).

The division carousels 2 described for the present invention, adapted to release the bottles 11, not along a single lane but already along lanes 14 arranged side by side to each other, could also constitute an autonomous device combined with the use of timing screws.

The shrinkwrap machine 6 is an automatic or manual packaging machine suitable for grouping the bottles with a thermoshrinkable film.

The transport system 7 with dynamic accumulation is preferably of the counting type and without bundled packs guides.

The handle applicator 8, i.e. an apparatus for applying the strip, generally of paper, which acts as the handle of the bundle, is installed in the represented example on the dynamic transport system 7 and precisely at the inlet of the belt of the palletiser 9. Indeed, one or more palletisers 9 are placed in line with possible pack orienting means 10.

The illustrated example is indicative and it is clear that in addition to the above-mentioned components, further machines suitable for specific purposes may be present without departing from the scope of protection of the invention.

For example, the shrinkwrap machine may be replaced by a different packaging machine, such as a cartoning machine. In this configuration, the transport system 7 will be a simple transport without accumulation functions, the oven and the relevant critical issues not being present in the event of stoppage.

Again from the figures, in particular from figure 6, it is observed that each lane of the eight transport lanes of the multi-lane conveying belt 3, transport lanes indicated by the reference 4, is divided into at least three sections 4A, 4B, 4C, that are sequential to each other in the advancement direction. Each of said sections 4A, 4B, 4C has a motor 5A, 5B, 5C that is electronically controlled by counting to keep a constant thrust on to the bottle division system of the downstream shrinkwrap machine. The sections 4A, 4B, 4C of each lane 4 are rectilinear and their arrangement is such as to allow the lateral deviation of the bottles 11 between one section and the other and to allow the scheduled slowdown along the line, as can clearly be seen in the drawings. The ends of two consecutive sections are laterally adjacent.

A discard lane, where present, is indicated by 4'.

A second preferred embodiment of the conveying multi-lane belt 3 according to the invention, shown in figure 8, provides for the presence, along each transport lane 4, of at least three, in the example four, modular sections 4'A, 4'B, 4'C, 4'D, each equipped with its own motor 5'A, 5'B, 5'C, 5'D, wherein each section has a lesser speed with respect to the upstream section and is constituted by a group of conveying belts, each controlled by its own motor 5'A, 5'B, 5'C, 5'D, arranged in oblique direction with respect to the advancement direction of the multi-lane conveying belt 3.

At each of the transport lanes 4, which are separated from each other by laminas 21, adjacent belts belonging to different sections are placed close to each other, along their lateral edge 25. Passing from one section to the next one, which is slower, the bottles 11 decelerate while advancing in a rectilinear line, that is to say, without changing direction.

The gripping means 13 of the rotating carousel 2 will unload the output bottles according to a predefined program, that is to say, depending on the scheme of work of the packaging machine 6.

On the connecting zone 12, the bottles 11 are subject to the centrifugal force and the contact/friction of the chain on which the bottles 11 rest.

As regards the second aim of the invention, the provision of a transport system 7 with dynamic accumulation associated with the packaging system allows the packs to be brought to the palletiser 9 and allows the shrinkwrap machine oven (oven, which as known, implements the thermoshrinking) to empty in the event of stoppage. On the contrary, if the packs should remain therein for too long they would be damaged.

The dynamic accumulation transport system 7 consists of a plurality of belts 15, 16, 17, 18, 19, 20 without guides on which the packs 10 rest. The series of belts 15, 16, 17, 18, 19, 20 are arranged head-adjacent, namely, along their short side.

Each belt 15, 16, 17, 18, 19, 20 has an independent motorisation so as to be able to govern, through a central, even computerised, control system, the space between one pack and the next, which will obviously be a function of the speed of the belts sequentially mounted in the advancement direction.

To create accumulation, the packs are brought closer without touching each other, slowing down the successive belt; whereas in normal conditions they are spaced as they leave the shrinkwrap machine. The advantage is that the packs can thus be brought closer without creating impacts between the same.

The belt indicated by 20 is the one that acts as a metering device for the palletiser and the handle applicator 8 can be applied to said belt 20.

An encoder and a checking and counting photocell are mounted on each belt. Thus the packs are kept under control throughout the path from the shrinkwrap machine to the palletiser, as number and position.

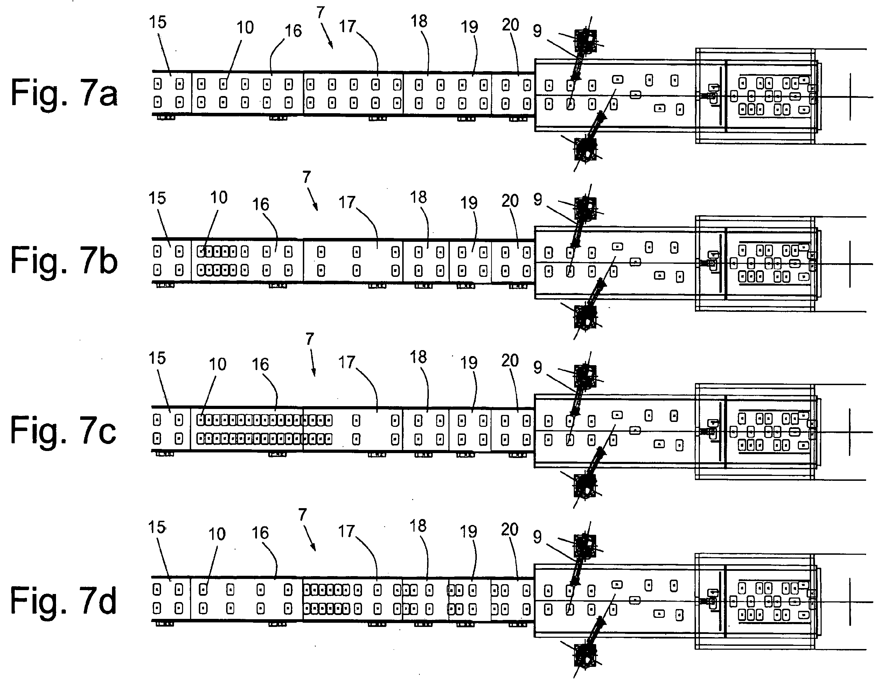

Figures 7a-7d show different operating configurations of the transport system 7 with dynamic accumulation object of the present invention. In particular, figure 7a shows normal operating conditions; figures 7b and 7c show operation in the emptying mode of the oven of the shrinkwrap machine 6 according to two successive stages; figure 7d shows operation in stoppage conditions of the palletiser 9.

In the packaging plant according to the invention, the described components are directly connected to each other without interposition of accumulation transports to constitute a single monobloc unit, equipped with a single centralised control (electrical panel, user interface), thus simplifying the management of the system.

The main advantages of the packaging system object of the invention relate to the following aspects:
- optimal feeding of the bottles into the packaging machine,
- optimal operation even in the event of bottles of unstable form,
- the packaging machine can work equally with single and double rows,
- packs transport system without change of format also passing from two-row mode with small packs to single-row mode for large packs,
- pre-packaged system without the need for lengthy onsite testing,
- compact system with saving of space due to the installation thereof.

## Claims

1. Bottle packaging system in a bottling line, said system comprising the following components:
a. a rotating carousel pick-up device (2) for picking up bottles (11) from a labelling or filling machine (1),
b. a rectilinear multi-lane (4, 4') conveying belt (3),
c. a packaging machine, such as a shrinkwrap machine (6) or a cartoning machine,
d. a transport system (7) for connecting the packs exiting from the packaging machine (6) with downstream devices, such as
e. at least one handle applicator (8) and
f. at least one in-line palletiser (9), and possible packs orientators (10),
**characterised in that** it comprises, at a grip circumference (C) of said rotating carousel (2), which corresponds to the point of release of the bottles (11) by the gripping means (13), a connecting zone (12) with the above-mentioned conveying belt (3), said connecting zone (12) consisting of a plurality of adjacent, flexible chain belts and with a spiral progression, that is to say, with increasing curvature radius, which constitute as many lanes (14), adapted to support and distance, in a centrifugal direction, the bottles (11) released onto them by said gripping means (13), directing them towards the corresponding lane (4, 4') of said conveying belt (3), the lanes (14) of said connecting zone (12) underneath the rotating carousel (2) being in a position of intersection (X) with said grip circumference (C), wherein said positions of intersection (X) between said grip circumference (C) and said lanes (14) are distributed in discrete positions equidistant along a circular arc of said grip circumference (C) of angle α between 180°-240°.

2. Packaging system according to claim 1, **characterised in that** said connecting zone (12) is formed by a series of a circular arc segments (12A, 12B, 12C) that are joined to each other.

3. Packaging system according to claim 2, **characterised in that** each segment (12A, 12B, 12C) is equipped with a fixed number of lanes (14) greater than the upstream segment (12A, 12B, 12C) in the advancement direction of the bottles, said segments (12A, 12B, 12C) being aligned to each other on their outer perimeters.

4. Packaging system according to any one of claims 2 or 3, **characterised in that** it comprises three segments (12A, 12B, 12C), each substantially defining a circular arc of about 90°.

5. Packaging system according to any one of the preceding claims, **characterised in that** said conveying belt (3) also comprises a discard path (4').

6. Packaging system as claimed in any one of the preceding claims, **characterised in that** each transport lane (4) of said multi-lane belt (3) is divided into at least three sections (4A, 4B, 4C; 4'A, 4'B, 4'C, 4'D), that succeed each other in the advancement direction, wherein each section has a lesser speed than the upstream one, preferably each of said at least three sections (4A, 4B, 4C; 4'A, 4'B, 4'C, 4'D) having its own motor (5A, 5B, 5C; 5'A, 5'B, 5'C, 5'D) that is electronically controlled by counting to maintain a constant thrust on to the downstream bottle division system.

7. Packaging system according to claim 6, **characterised in that** the ends of two consecutive sections of said at least three sections (4A, 4B, 4C) are laterally adjacent, the bottles (11) being laterally diverted with respect to an advancement direction on passage to the next section.

8. Packaging system according to claim 6, **characterised in that** said at least three sections (4'A, 4'B, 4'C, 4'D) are constituted by at least three groups of conveying belts, each controlled by said own motor (5'A, 5'B, 5'C, 5'D), arranged in oblique direction with respect to the advancement direction of the conveying multi-lane belt (3), wherein, at each transport lane (4), adjacent belts belonging to different sections are placed alongside a lateral edge thereof (25), the bottles (11) advancing in a rectilinear manner in the advancement direction.

9. Packaging system according to claim 8, **characterised in that** said transport lanes (4) of the multi-lane belt (3) and/or said transport lanes (14) of the connecting zone (12) are separated from each other by a lamina (21).

10. Packaging system according to any one of the preceding claims, **characterised in that** said transport r system is a dynamic accumulation (7) system and comprises a plurality of belts (15, 16, 17, 18, 19, 20) without packs support guides (10), said belts (15, 16, 17, 18, 19, 20) being arranged head-adjacent, that is to say, along their short side, each belt (15, 16, 17, 18, 19, 20) having an independent motorisation so as to be able to govern, through a central control system, the space between one and the other pack as a function of the speed of the belts mounted in succession and to bring the packs closer without creating impacts between the same.

11. Packaging system according to claim 10, **characterised in that** each belt (15, 16, 17, 18, 19, 20) has an encoder and a photocell mounted for checking and counting the packs.

12. Packaging system according to claim 11, **characterised in that** the last belt (20) acts as a metering device for the palletiser (9).

13. Packaging system according to claim 11 or 12, **characterised in that** said handle applicator (8) is applied to said belt (20) at the palletiser (9) inlet.

14. Packaging system according to any one of the preceding claims, **characterised in that** each of said gripping means (13) of said rotating carousel (2) comprises a thrust linear actuator (22), said gripping means (13) being guided in reciprocating movement in a radial direction by a cam control (23) between an extracted position corresponding to the opening of said gripping means (13) and a retracted position corresponding to the closure of said gripping means (13), preferably a cam (23) being associated with each lane (14), said cams (23) being distributed on two superimposed discs (24).

15. Packaging system according to any one of the preceding claims, **characterised in that** said components are directly connected to each other without interposition of accumulation transports to constitute a single monobloc unit, equipped with a single centralised control.

## Patentansprüche

1. Flaschenverpackungssystem in einer Flaschenabfüllanlage, wobei das System die folgenden Komponenten umfasst:
a. eine Aufnahmevorrichtung (2) für rotierendes Karussell zum Aufnehmen von Flaschen (11) von einer Etikettier- oder Befüllungsmaschine (1),
b. ein rechtwinkliges mehrspuriges (4, 4') Förderband (3),
c. eine Verpackungsmaschine, wie eine Schrumpfverpackungsmaschine (6) oder eine Kartoniermaschine,
d. ein Transportsystem (7) zum Verbinden der die Verpackungsmaschine (6) verlassenden Packungen mit stromabwärtigen Vorrichtungen, wie:
e. zumindest einem Griffapplikator (8) und
f. zumindest einem Reihen-Palletierer (9) und möglichen Packungsorientierern (10),
**dadurch gekennzeichnet, dass** es an einem Greifumfang (C) des rotierenden Karussells (2), der dem Punkt der Freigabe der Flaschen (11) durch das Greifmittel (13) entspricht, eine Verbindungszone (12) mit dem oben erwähnten Förderband (3) umfasst, wobei die Verbindungszone (12) aus einer Mehrzahl benachbarter, flexibler Kettenbänder besteht und eine spiralförmigen weiteren Verlauf, d.h. mit zunehmendem Krümmungsradius aufweist, der so viele Spuren (14) bildet, die derart angepasst sind, in einer Zentrifugalrichtung die Flaschen (11), die auf diese durch das Greifmittel (13) freigegeben werden, zu tragen und zu beabstanden, wobei diese zu der entsprechenden Spur (4, 4') des Förderbandes (3) gelenkt werden, wobei die Spuren (14) der Verbindungszone (12) unterhalb des rotierenden Karussells (2) in einer Überschneidungsposition (X) mit dem Greifumfang (C) sind, wobei die Positionen der Überschneidung (X) zwischen dem Greifumfang (C) und den Spuren (14) in diskreten Positionen verteilt sind, die entlang eines Kreisbogens des Greifumfangs (C) eines Winkels α zwischen 180°-240° gleich beabstandet sind.

2. Verpackungssystem nach Anspruch 1, **dadurch gekennzeichnet, dass** die Verbindungszone (12) durch eine Reihe von Kreisbogensegmenten (12A, 12B, 12C) gebildet ist, die aneinandergefügt sind.

3. Verpackungssystem nach Anspruch 2, **dadurch gekennzeichnet, dass** jedes Segment (12A, 12B, 12C) mit einer fixierten Anzahl von Spuren (14) ausgestattet ist, die größer bei dem stromaufwärtigen Segment (12A, 12B, 12C) in der Vorschubrichtung der Flaschen ist, wobei die Segmente (12A, 12B, 12C) in ihren Außenumfängen zueinander ausgerichtet sind.

4. Verpackungssystem nach einem der Ansprüche 2 oder 3, **dadurch gekennzeichnet, dass** es drei Segmente (12A, 12B, 12C) umfasst, die jeweils im Wesentlichen einen Kreisbogen von etwa 90°definieren.

5. Verpackungssystem nach einem der vorhergehenden Ansprüche, **dadurch gekennzeichnet, dass** das Förderband (3) auch einen Ausschusspfad (4') umfasst.

6. Verpackungssystem nach einem der vorhergehenden Ansprüche, **dadurch gekennzeichnet, dass** jede Transportspur (4) des mehrspurigen Bandes (3) in zumindest drei Abschnitte (4A, 4B, 4C; 4'A, 4'B, 4'C, 4'D) unterteilt ist, die in der Vorschubrichtung aufeinanderfolgen, wobei jeder Abschnitt eine kleinere Geschwindigkeit als der stromaufwärtige aufweist, wobei bevorzugt jeder der zumindest drei Abschnitte (4A, 4B, 4C; 4'A, 4'B, 4'C, 4'D) seinen eigenen Motor (5A, 5B, 5C; 5'A, 5'B, 5'C, 5'D) besitzt, der durch Zählen zur Beibehaltung eines konstanten Schubs auf das stromabwärtige Flaschenteilsystem elektronisch gesteuert ist.

7. Verpackungssystem nach Anspruch 6, **dadurch gekennzeichnet, dass** die Enden von zwei aufeinanderfolgenden Abschnitten der zumindest drei Abschnitte (4A, 4B, 4C) seitlich benachbart sind, wobei die Flaschen (11) seitlich in Bezug auf eine Vorschubrichtung bei Durchgang zu dem nächsten Abschnitt umgelenkt sind.

8. Verpackungssystem nach Anspruch 6, **dadurch gekennzeichnet, dass** die zumindest drei Abschnitte (4'A, 4'B, 4'C, 4'D) durch zumindest drei Gruppen von Förderbändern gebildet sind, von denen jedes durch den eigenen Motor (5'A, 5'B, 5'C, 5'D) gesteuert ist und die in schräger Richtung in Bezug auf die Vorschubrichtung des mehrspurigen Förderbandes (3) angeordnet sind, wobei an jeder Transportspur (4) benachbarte Bänder, die zu verschiedenen Abschnitten gehören, entlang eines Seitenrandes davon (25) platziert sind, wobei die Flaschen (11) in einer rechtwinkligen Weise in der Vorschubrichtung vorgeschoben werden.

9. Verpackungssystem nach Anspruch 8, **dadurch gekennzeichnet, dass** die Transportspuren (4) des mehrspurigen Bandes (3) und/oder die Transportspuren (14) der Verbindungszone (12) voneinander durch einen Schichtstoff (21) getrennt sind.

10. Verpackungssystem nach einem der vorhergehenden Ansprüche, **dadurch gekennzeichnet, dass** das Transportsystem ein System zur dynamischen Akkumulation (7) ist und eine Mehrzahl von Bändern (15, 16, 17, 18, 19, 20) ohne Packungsträgerführungen (10) umfasst, wobei die Bänder (15, 16, 17, 18, 19, 20) mit benachbarten Vorderteilen, d.h. entlang ihrer kurzen Seite, angeordnet sind, wobei jedes Band (15, 16, 17, 18, 19, 20) eine unabhängige Motorisierung besitzt, um so in der Lage zu sein, durch ein zentrales Steuersystem den Raum zwischen einer und der nächsten Packung als eine Funktion der Geschwindigkeit der Bänder, die aufeinanderfolgend montiert sind, zu bestimmen und die Packungen ohne Erzeugung von Aufprall zwischen diesen einander näher zu bringen.

11. Verpackungssystem nach Anspruch 10, **dadurch gekennzeichnet, dass** jedes Band (15, 16, 17, 18, 19, 20) einen Codierer und eine Fotozelle aufweist, die zum Prüfen und Zählen der Packungen montiert sind.

12. Verpackungssystem nach Anspruch 11, **dadurch gekennzeichnet, dass** das letzte Band (20) als eine Zuführvorrichtung für den Palletierer (9) wirkt.

13. Verpackungssystem nach einem der Ansprüche 11 oder 12, **dadurch gekennzeichnet, dass** der Griffapplikator (8) auf das Band (20) an dem Einlass des Palletierers (9) aufgebracht ist.

14. Verpackungssystem nach einem der vorhergehenden Ansprüche, **dadurch gekennzeichnet, dass** jedes der Greifmittel (13) des rotierenden Karussells (2) einen Schublinearaktor (22) umfasst, wobei das Greifmittel (13) in Hubbewegung in radialer Richtung durch eine Nockensteuerung (23) zwischen einer ausgefahrenen Position, die der Öffnung des Greifmittels (13) entspricht, und einer zurückgezogenen Position, die dem Verschluss des Greifmittels (13) entspricht, geführt ist, wobei bevorzugt eine Nocke (23) jeder Spur (14) zugeordnet ist, wobei die Nocken (23) an zwei übereinander gelagerten Scheiben (24) verteilt sind.

15. Verpackungssystem nach einem der vorhergehenden Ansprüche, **dadurch gekennzeichnet, dass** die Komponenten direkt miteinander ohne Einfügung von Akkumulationstransporten verbunden sind, um eine einzelne Monoblockeinheit zu bilden, die mit einer einzelnen zentralisierten Steuerung ausgestattet ist.

## Revendications

1. Système d'emballage de bouteille dans une ligne d'embouteillage, ledit système comprenant les composants suivants :
a. un dispositif de préhension à carrousel rotatif (2) pour la préhension de bouteilles (11) d'une machine d'étiquetage ou de remplissage (1),
b. une bande de transport (3) multivoies rectilignes (4, 4'),
c. une machine d'emballage telle qu'une machine d'emballage par rétraction (6) ou une machine d'encartonnage,
d. un système de transport (7) pour la liaison des packs sortant de la machine d'emballage (6) avec des dispositifs en aval tels que
e. au moins un applicateur de manipulation (8) et
f. au moins un palettiseur en ligne (9) et de possibles éléments d'orientation de packs (10),
**caractérisé en ce qu'**il comprend sur une circonférence de préhension (C) dudit carrousel rotatif (2) qui correspond au point de libération des bouteilles (11) par les moyens de préhension (13), une zone de liaison (12) avec la bande de transport susmentionnée (3), ladite zone de liaison (12) se composant d'une pluralité de bandes à traction par chaînes flexibles adjacentes et avec une progression en spirale, c'est-à-dire avec un rayon de courbure croissant, qui constituent autant de nombreuses voies (14) adaptées pour supporter et espacer dans une direction centrifuge les bouteilles (11) libérées sur elles par lesdits moyens de préhension (13), les dirigeant vers la voie correspondante (4, 4') de ladite bande de transport (3), les voies (14) de ladite zone de liaison (12) sous le carrousel rotatif (2) étant dans une position d'intersection (X) avec ladite circonférence de préhension (C), dans lequel lesdites positions d'intersection (X) entre ladite circonférence de préhension (C) et lesdites voies (14) sont distribuées dans des positions discrètes équidistantes le long d'un arc circulaire de ladite circonférence de préhension (C) d'angle α entre 180° et 240°.

2. Système d'emballage selon la revendication 1, **caractérisé en ce que** ladite zone de liaison (12) est formée par une série de segments d'arc circulaire (12A, 12B, 12C) qui sont joints les uns aux autres.

3. Système d'emballage selon la revendication 2, **caractérisé en ce que** chaque segment (12A, 12B, 12C) est équipé d'un nombre fixe de voies (14) supérieur au segment en amont (12A, 12B, 12C) dans la direction d'avance des bouteilles, lesdits segments (12A, 12B, 12C) étant alignés les uns sur les autres sur leurs périmètres extérieurs.

4. Système d'emballage selon l'une quelconque des revendications 2 ou 3, **caractérisé en ce qu'**il comprend trois segments (12A, 12B, 12C), chacun définissant sensiblement un arc circulaire d'environ 90°.

5. Système d'emballage selon l'une quelconque des revendications précédentes, **caractérisé en ce que** ladite bande de transport (3) comprend aussi une voie de mise au rebut (4').

6. Système d'emballage selon l'une quelconque des revendications précédentes, **caractérisé en ce que** chaque voie de transport (4) de ladite bande multivoies (3) est divisée en au moins trois sections (4A, 4B, 4C ; 4'A, 4'B, 4'C, 4'D) qui se succèdent dans la direction d'avance, dans lequel chaque section a une vitesse inférieure à la section en amont, de préférence chacune desdites au moins trois sections (4A, 4B, 4C ; 4'A, 4'B, 4'C, 4'D) présentant son propre moteur (5A, 5B, 5C ; 5'A, 5'B, 5'C, 5'D) qui est commandé électroniquement par comptage pour maintenir une poussée constante sur le système de division de bouteille en aval.

7. Système d'emballage selon la revendication 6, **caractérisé en ce que** les extrémités de deux sections consécutives desdites au moins trois sections (4A, 4B, 4C) sont latéralement adjacentes, les bouteilles (11) étant latéralement détournées par rapport à une direction d'avance sur le passage à la prochaine section.

8. Système d'emballage selon la revendication 6, **caractérisé en ce que** lesdites au moins trois sections (4'A, 4'B, 4'C, 4'D) sont constituées par au moins trois groupes de bandes de transport, chacune commandée par ledit propre moteur (5'A, 5'B, 5'C, 5'D) agencé dans la direction oblique par rapport à la direction d'avance de la bande multivoies de transport (3), dans lequel sur chaque voie de transport (4), des bandes adjacentes appartenant à différentes sections sont placées le long d'une arête latérale de celles-ci (25), les bouteilles (11) avançant de manière rectiligne dans la direction d'avance.

9. Système d'emballage selon la revendication 8, **caractérisé en ce que** lesdites voies de transport (4) de la bande multivoies (3) et/ou lesdites voies de transport (14) de la zone de liaison (12) sont séparées les unes des autres par une lamelle (21).

10. Système d'emballage selon l'une quelconque des revendications précédentes, **caractérisé en ce que** ledit système de transport est un système d'accumulation dynamique (7) et comprend une pluralité de bandes (15, 16, 17, 18, 19, 20) sans guides de support de packs (10), lesdites bandes (15, 16, 17, 18, 19, 20) étant agencées de manière adjacente à la tête, c'est-à-dire le long de leur petit côté, chaque bande (15, 16, 17, 18, 19, 20) présentant une motorisation indépendante de sorte à être capable de gérer, par un système de commande central, l'espace entre un et l'autre pack en fonction de la vitesse des bandes montées successivement et à amener les packs plus près sans créer d'impacts entre ceux-ci.

11. Système d'emballage selon la revendication 10, **caractérisé en ce que** chaque bande (15, 16, 17, 18, 19, 20) présente un codeur et une photocellule montés pour vérifier et compter les packs.

12. Système d'emballage selon la revendication 11, **caractérisé en ce que** la dernière bande (20) agit comme un dispositif de mesurage pour le palettiseur (9).

13. Système d'emballage selon la revendication 11 ou 12, **caractérisé en ce que** ledit applicateur de manipulation (8) est appliqué à ladite bande (20) sur l'entrée du palettiseur (9).

14. Système d'emballage selon l'une quelconque des revendications précédentes, **caractérisé en ce que** chacun desdits moyens de préhension (13) dudit carrousel rotatif (2) comprend un actionneur à poussée linéaire (22), lesdits moyens de préhension (13) étant guidés dans un mouvement réciproque dans une direction radiale par une commande à came (23) entre une position extraite correspondant à l'ouverture desdits moyens de préhension (13) et une position rétractée correspondant à la fermeture desdits moyens de préhension (13), de préférence une came (23) étant associée à chaque voie (14), lesdites cames (23) étant distribuées sur deux disques superposés (24).

15. Système d'emballage selon l'une quelconque des revendications précédentes, **caractérisé en ce que** lesdits composants sont directement reliés les uns aux autres sans interposition de transports d'accumulation pour constituer une seule unité monobloc équipée d'une seule commande centralisée.
